# FASCICULE DE BREVET EUROPEEN

(11) **EP 1 730 806 B1**
(45) Date de publication et mention de la délivrance du brevet: **18.07.2007**
(21) Numéro de dépôt: 05717715.6
(22) Date de dépôt: 15.02.2005
(51) Int. Cl.: H01M 8/06, H01M 16/00, B01D 5/00

(54) **PROCEDE DE REGULATION DE LA PRESSION D'UN GAZ D'ECHAPPEMENT D'UNE PILE A COMBUSTIBLE DE MANIERE A REGULER L'APTITUDE A LA CONDENSATION DE CE GAZ**
VERFAHREN ZUR STEUERUNG DES ABGASDRUCKS EINER BRENNSTOFFZELLE ZWECKS REGELUNG DER KONDENSATIONSFÄHIGKEIT DIESES GASES
METHOD FOR CONTROLLING THE EXHAUST GAS PRESSURE OF A COMBUSTION CELL IN ORDER TO CONTROL THE CONDENSATION CAPACITY OF SAID GAS

(30) Priorité: 25.02.2004 FR 0401892
(43) Date de publication de la demande: 13.12.2006
(73) Titulaire: Renault SAS, 92100 Boulogne Billancourt (FR)
(72) Inventeur: BERNAY, Cécile, 75015 Paris (FR); GERARD, David, 75008 Paris (FR); LE NOC, David, 75014 Paris (FR)
(86) Numéro de dépôt international: PCT/FR2005/050097
(87) Numéro de publication internationale: WO 2005/086269

(56) Documents cités:
- EP-A- 1 072 772
- WO-A-03/047019
- WO-A-03/065484
- US-B1- 6 497 972
- PATENT ABSTRACTS OF JAPAN vol. 1998, no. 11, 30 septembre 1998 (1998-09-30) & JP 10 177863 A (MITSUBISHI HEAVY IND. LTD.), 30 juin 1998 (1998-06-30)

## Description

L'invention concerne un procédé de régulation de la pression d'un gaz d'échappement d'une pile à combustible de manière à réguler l'aptitude à la condensation dudit gaz.

Ce procédé est particulièrement destiné à une mise en oeuvre dans un véhicule automobile équipé d'un générateur d'électricité, ou "module de puissance", comportant une pile à combustible et utilisé pour alimenter les consommateurs électriques du véhicule, en particulier un moteur électrique de traction.

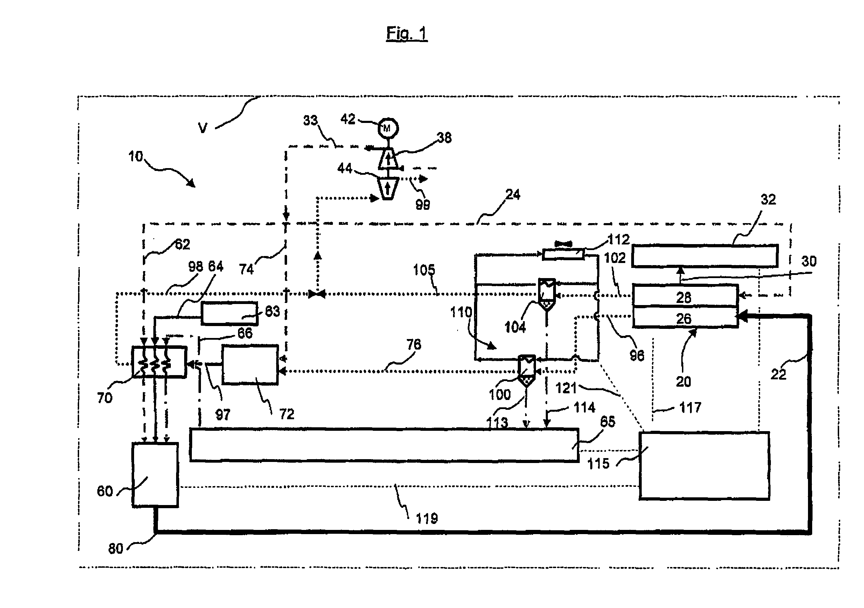

La figure 1 représente une architecture simplifiée type d'un générateur d'électricité 10 monté dans un véhicule V.

Le générateur 10 comporte une pile à combustible 20, par exemple de type PEMFC, alimentée en combustible et en air, source d'oxygène, par l'intermédiaire de canalisations 22 et 24, respectivement. La pile à combustible 20 comporte des compartiments anodique 26 et cathodique 28 et est connectée électriquement par une ligne 30 à une batterie de stockage 32.

Le circuit d'alimentation en air comporte une canalisation 33 dans laquelle est inséré un compresseur 38 entraîné par un moteur électrique 42 et/ou une turbine 44.

Le combustible, classiquement un gaz riche en hydrogène, est produit dans un système reformeur 60, par transformation d'un carburant primaire tel que de l'essence, du diesel, du naphta, de l'alcool, un ester, ou un hydrocarbure, en présence d'air et de vapeur d'eau. Le système reformeur 60 est alimenté en air comprimé, depuis la sortie du compresseur 38, par l'intermédiaire d'une canalisation 62, alimenté en carburant primaire, depuis un réservoir 63, par l'intermédiaire d'une canalisation 64, et alimenté en eau, depuis un réservoir 65 par l'intermédiaire d'une canalisation 66.

Un échangeur 70 chauffé par un brûleur 72 est prévu pour chauffer les réactifs, c'est-à-dire le carburant primaire, l'eau et l'air, destinés au système reformeur 60.

Le brûleur 72 est alimenté en air comprimé par le compresseur 38 par l'intermédiaire d'une canalisation 74, et en hydrogène résiduel, c'est-à-dire non consommé par la pile à combustible 20, par l'intermédiaire d'une canalisation 76.

La canalisation 22 connecte le système reformeur 60 et la pile à combustible 20.

Les gaz sortant des compartiments anodique 26 et cathodique 28 sont appelés ci-après gaz « anodique » et « cathodique », respectivement.

Le circuit d'évacuation du gaz anodique comporte une canalisation 96 connectant une sortie du compartiment anodique 26 et l'entrée d'un condenseur anodique 100, la canalisation 76 connectant une sortie du condenseur anodique 100 et une entrée du brûleur 72, une canalisation 97 connectant une sortie du brûleur 72 et une entrée de l'échangeur 70, une canalisation 98 connectant une sortie de l'échangeur 70 et une entrée de la turbine 44, et une canalisation 99 connectant une sortie de la turbine 44 et l'extérieur du véhicule V.

Le circuit d'évacuation du gaz cathodique comporte une canalisation 102 connectant une sortie du compartiment cathodique 28 et l'entrée d'un condenseur cathodique 104, une canalisation 105 connectant une sortie du condenseur cathodique 104 et une entrée de la turbine 44, et la canalisation 99 d'échappement vers l'extérieur.

Les condenseurs anodique 100 et cathodique 104 sont refroidis au moyen d'un circuit de refroidissement de condenseurs, référencé 110, comportant un radiateur 112 apte à évacuer vers l'extérieur l'énergie calorifique récupérée. L'eau récupérée par les condenseurs anodique 100 et cathodique 104 est envoyée, par l'intermédiaire de canalisations 113 et 114, respectivement, vers le réservoir 65.

Le générateur 10 comporte encore classiquement un calculateur 115 dûment programmé pour commander au moins le fonctionnement de la pile à combustible 20, du système reformeur 60 et du circuit de refroidissement 110. Les lignes de commande correspondantes, référencées 117, 119 et 121 respectivement, ont été représentées en traits pointillés fins.

Le fonctionnement du générateur 10 de la figure 1 est le suivant.

De l'air extérieur est aspiré et comprimé par le compresseur 38 à une pression d'environ 4,5 bars. Il alimente, après refroidissement éventuel, le brûleur 72, le système reformeur 60 par l'intermédiaire de l'échangeur 70, et le compartiment cathodique 28. La pression de l'air comprimé est adaptée à la charge de la pile à combustible 20 : La pression est d'autant plus grande que la puissance électrique à fournir par la pile à combustible 20 est élevée.

L'échangeur 70 du système reformeur 60, chauffé par les gaz d'échappement du brûleur 72, réchauffe tous les réactifs destinés au système reformeur 60 jusqu'à des températures adaptées à la transformation du carburant Le reformât sortant du système reformeur 60, riche en hydrogène, est injecté, après refroidissement éventuel, dans le compartiment anodique 26.

Dans la pile à combustible 20, l'hydrogène du reformât injecté est partiellement converti par une réaction électrochimique afin de fournir de l'électricité. L'électricité est stockée dans la batterie 32, ou transmise à des consommateurs électriques du véhicule.

A la sortie du compartiment anodique 26, le gaz anodique a une température d'environ 90 à 120°C et une pression d'environ 3 bars. Il traverse le condenseur anodique 100 et s'y décharge d'une partie de sa vapeur d'eau. Le gaz anodique contient de l'hydrogène résiduel, non consommé dans la pile à combustible 20. Après avoir traversé le condenseur anodique 100, le gaz anodique est injecté dans le brûleur 72 de manière que ce dernier brûle cet hydrogène résiduel. Après combustion de l'hydrogène résiduel et refroidissement dans l'échangeur 70, le gaz anodique traverse la turbine 44 et est évacué vers l'extérieur du véhicule V.

A la sortie du compartiment cathodique 28, le gaz cathodique a une température d'environ 90 à 120°C et une pression d'environ 3 bars. Il traverse le condenseur cathodique 104 et s'y décharge d'une partie de sa vapeur d'eau. A la sortie du condenseur cathodique 104, la température du gaz cathodique est d'environ 60 °C, sa pression étant toujours d'environ 3 bars. Le gaz cathodique traverse la turbine 44 puis est évacué vers l'extérieur du véhicule V.

La pression des gaz anodique et cathodique dans les condenseurs anodique et cathodique est directement liée à la pression de l'air comprimé par le compresseur 38. La puissance transférée par les gaz anodique et cathodique à la turbine 44, donc au compresseur 38, est fonction de la pression de ces gaz.

Pour qu'un générateur d'électricité puisse être facilement mis en oeuvre dans un véhicule automobile, il est nécessaire d'assurer son autonomie en eau et de garantir que la récupération d'eau dans les condenseurs 100 et 104 du véhicule suffira à satisfaire les besoins du système reformeur 60. Le débit de condensât dans un condenseur dépend de la température de sa source froide, c'est-à-dire du fluide de refroidissement circulant dans le circuit 110, et de la pression du gaz à condenser.

La température de la source froide est généralement d'une dizaine de degrés Celsius supérieure à la température extérieure. Quand la pile à combustible 20 fonctionne à charge élevée, la pression des gaz anodique et cathodique, classiquement d'environ 3 bars, permet ainsi une récupération d'eau suffisante pour assurer l'autonomie en eau du générateur.

Par forte chaleur ou lorsque la charge de la pile à combustible 20 est faible - et donc que la pression des gaz anodique et cathodique dans les condenseurs est peu élevée - la récupération d'eau peut s'avérer insuffisante.

Une solution, décrite dans US 6,497,972 pour une architecture ne comportant pas de turbine, consiste à augmenter la pression du gaz comprimé par le compresseur, et ainsi les pressions des gaz anodique et cathodique dans les condenseurs anodique et cathodique, respectivement, jusqu'à des valeurs suffisantes pour assurer l'autonomie en eau du générateur électrique. Si nécessaire, la pression du gaz comprimé est donc augmentée au-delà de la pression minimale pour assurer le fonctionnement optimal de la pile à combustible. A cet effet, la puissance électrique consommée par le compresseur doit être augmentée, ce qui entraîne une perte de rendement du générateur, la part relative de la production électrique du générateur disponible pour la traction étant réduite.

WO 03/065484 A divulgue une méthode pour contrôler la pression de fonctionnement d'une pile à combustible, caractérisée en ce que cette pression est réglée par optimisation de l'efficacité du système de pile à combustible, en fonction d'au moins un paramètre dépendant de la quantité variable d'eau à recycler.

WO 03/047019 A décrit un système générateur d'électricité comprenant une pile à combustible et une batterie de stockage rechargeable, système dans lequel un processeur de réactifs est contrôlé en fonction des besoins ponctuels déterminés pour la charge externe et la batterie de stockage.

US-B1-6 497 972 divulgue un système de pile à combustible comprenant un réservoir d'eau, un réformeur produisant un gaz réformé par réformage d'un carburant en utilisant l'eau du réservoir, et un condenseur permettant de récupérer l'eau du gaz d'échappement de la pile et de retransférer l'eau ainsi récupérée dans le réservoir.

EP-A-1 072 772 présente un module de génération d'électricité comprenant une pile à combustible, un compresseur alimentant la pile à combustible en gaz comburant comprimé, une turbine alimentée par des gaz s'échappant de la pile à combustible et reliée mécaniquement au compresseur, et un dispositif de régulation de la pression du gaz comburant dans la pile à combustible.

JP 10 177863 A divulgue une méthode de contrôle d'un module pressurisé de pile à combustible à électrolyte solide dans un système de génération d'électricité, laquelle méthode implique un contrôle de l'ouverture d'un ensemble de valves de contrôle de pression afin de garantir le contrôle de la pression du module, en fonction des variations de température de ce dernier.

Il existe donc un besoin pour un procédé de régulation de la pression d'un gaz comprimé par un compresseur permettant d'augmenter cette pression avec une perte de rendement minimisée.

Le but de la présente invention est de fournir un tel procédé.

Selon l'invention, on atteint ce but au moyen d'un procédé de régulation de la pression d'un gaz d'échappement d'une pile à combustible de manière à réguler l'aptitude à la condensation dudit gaz, remarquable en ce qu'on régule ladite pression par ajustement de la puissance électrique demandée à ladite pile à combustible.

Dans le procédé mis en oeuvre dans US 6,497,972, en cas de besoin en eau, la puissance électrique demandée à la pile à combustible n'est augmentée que dans la mesure nécessaire pour fournir le surplus d'énergie nécessaire au compresseur. Ce surplus d'énergie n'est donc utilisé que pour augmenter l'aptitude à la condensation du gaz d'échappement et assurer un fonctionnement correct du générateur. Il en résulte une diminution du rendement.

La diminution du rendement peut également s'expliquer de la manière suivante : Dans US 6,497,972, en cas de besoin en eau, la régulation de la pression du gaz d'échappement est obtenue par ajustement du fonctionnement du compresseur. Si, en conséquence, la pression de l'air comprimé alimentant la pile à combustible dépasse les seuls besoins de la pile à combustible nécessaires à son fonctionnement, le surplus de pression ne sert qu'à améliorer l'aptitude à la condensation du gaz d'échappement. La puissance consommée par le compresseur pour fournir le surplus de pression conduit donc à une perte de rendement

Selon l'invention, le surplus de puissance électrique demandé à la pile à combustible en cas de besoin en eau n'est plus directement lié aux besoins du compresseur, comme dans US 6,497,972. La puissance électrique est directement ajustée en fonction de la pression du gaz d'échappement à atteindre. Pour augmenter la pression de gaz d'échappement, on modifie le point de fonctionnement de la pile à combustible de manière que ce point de fonctionnement exige une pression d'air comprimé entrant supérieure. Le surplus de pression nécessaire pour satisfaire le besoin en eau est donc avantageusement mis à profit pour augmenter la production de puissance électrique par la pile à combustible. Comme on le verra plus en détail dans la suite de la description, il en résulte une diminution plus faible, voire sensiblement nulle, du rendement du générateur.

De préférence, on stocke l'énergie électrique produite par la pile à combustible et non consommée.

L'invention concerne également un dispositif de condensation d'un gaz d'échappement d'une pile à combustible comportant un condenseur par lequel transite ledit gaz d'échappement et des moyens de régulation de la pression dudit gaz d'échappement dans ledit condenseur, remarquable en ce que lesdits moyens de régulation sont mis en oeuvre selon un procédé conforme à l'invention.

De préférence, ce dispositif comporte une turbine par laquelle transite ledit gaz d'échappement après avoir traversé ledit condenseur. De préférence encore ladite turbine est couplée à un compresseur d'un gaz destiné à alimenter en air ladite pile à combustible et/ou un système reformeur de carburant alimentant ladite pile à combustible. De préférence enfin, ledit compresseur comporte deux étages de compression.

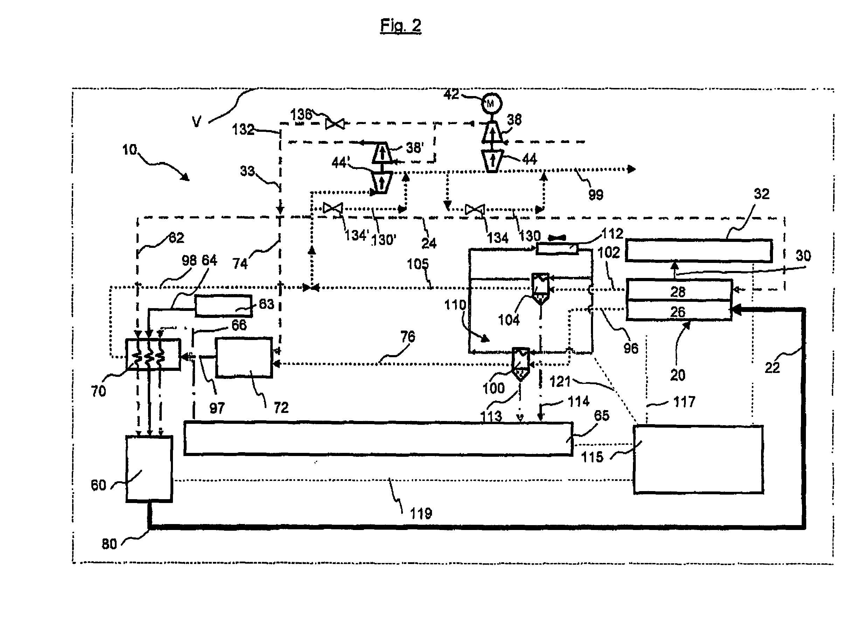

D'autres caractéristiques et avantages de la présente invention apparaîtront à la lecture de la description qui va suivre et à l'examen du dessin annexé dans lequel la figure 1, partiellement décrite en introduction représente schématiquement un générateur d'électricité apte à mettre en oeuvre un procédé selon la présente invention, et la figure 2 représente une variante de l'invention.

Sur la figure 1, les circuits d'alimentation en air de la pile à combustible, du brûleur, et du système reformeur ont été représentés en trait interrompu. Le circuit d'alimentation en combustible de la pile à combustible a été représenté en trait épais. Le circuit d'alimentation en eau du système reformeur a été représenté en trait mixte. Les circuits d'évacuation des gaz anodique et cathodique ont été représentés en trait pointillé.

A la différence du générateur décrit dans US 6,497,972, le générateur selon l'invention comporte de préférence une turbine 44 entraînée par le gaz anodique après qu'il a éventuellement réagi dans le brûleur 72, et/ou par le gaz cathodique. La puissance transférée par les gaz anodique et/ou cathodique à la turbine 44, donc au compresseur 38, est fonction de la pression de ce ou ces gaz.

Dans le mode de réalisation préféré de l'invention, le générateur 10 est commandé de la manière suivante.

Le calculateur 115 compare en permanence le besoin total de l'ensemble des consommateurs d'eau et la production d'eau condensée par les condenseurs 100 et 104.

Si le besoin en eau est supérieur à la production, par exemple du fait d'une température élevée de la source froide des condenseurs ou d'une surconsommation dans le système reformeur 60, le calculateur 115 évalue si la quantité d'eau dans le réservoir 65 est suffisante pour garantir une alimentation satisfaisante des consommateurs en eau.

Si le besoin est inférieur à la production ou que la quantité d'eau dans le réservoir 65 est suffisante, le calculateur 115 commande classiquement la pile à combustible 20 de manière à satisfaire les besoins en électricité des différents consommateurs, et en particulier du moteur de traction.

Si le besoin est supérieur à la production et que la quantité d'eau dans le réservoir 65 est insuffisante, le calculateur 115 évalue la pression P nécessaire dans les condenseurs 100 et 104 pour rétablir un bilan de production d'eau liquide positif, c'est à-dire une production totale en condensât supérieure à la consommation totale.

Le calculateur 115 évalue alors la puissance électrique, ou « charge », de la pile à combustible 20 nécessaire pour que les gaz anodique et cathodique entrent dans les condenseurs 100 et 104, respectivement, avec cette pression P.

Puis le calculateur 115 commande les différents organes du générateur 10, et ajuste en particulier l'alimentation en carburant et la demande de courant dans la pile à combustible, de manière que la pile à combustible 20 produise cette puissance électrique.

Le bilan de production d'eau redevient ainsi positif. La production électrique de la pile à combustible 20 dépasse alors les besoins instantanés des consommateurs électriques. Si la charge de la batterie 32 le permet, le calculateur 115 commande le stockage du surplus d'énergie électrique dans la batterie 32. Sinon, !e calculateur 115 arrête le générateur 10 et connecte électriquement les consommateurs électriques à la batterie 32.

L'augmentation de la production électrique au-delà des seuls besoins des consommateurs électriques nécessite une augmentation de la pression d'air comprimé par le compresseur 38, mais permet avantageusement de limiter la diminution du rendement électrique global du générateur 10, comme le montre l'exemple suivant.

Supposons que la pile à combustible 20 délivre une puissance électrique de 50 kWe répartis entre le moteur 42 d'entraînement du compresseur 38 pour environ 10 kWe et le moteur de traction du véhicule pour 40 kWe. Supposons également que la pression des gaz anodique et cathodique, de 2 bars, permet à la turbine 44 de fournir au compresseur 38 une puissance supplémentaire de 10 kWe. Le compresseur 38 consomme donc 20 kWe.

Supposons qu'il faille augmenter la récupération d'eau dans les condenseurs 100 et 104 et que, à cet effet le calculateur 115 estime que l'augmentation des gaz anodique et cathodique nécessaire est de 0,5 bar, pour atteindre une pression P de 2,5 bars. Supposons encore que la puissance supplémentaire exigée du compresseur 38 à cet effet soit de 9 kWe, la puissance totale consommée par le compresseur atteignant 29 kWe.

Supposons que cette puissance supplémentaire de 9 kWe puisse résulter d'une augmentation de 4 kWe de la puissance fournie au moteur 42 par la pile à combustible 20, les 5 kWe complémentaires étant fournis par la turbine 44 du fait de l'augmentation de la pression des gaz anodique et cathodique.

Le rendement électrique du générateur 20 est le rapport entre la puissance électrique « utile », c'est-à-dire stockée dans la batterie 32 ou utilisée par le moteur de traction et les consommateurs autres que ceux nécessaires au fonctionnement du générateur 10, et la puissance électrique produite par la pile à combustible 20.

Pour rétablir un bilan en eau satisfaisant, le rendement électrique du générateur après augmentation de la pression dans les condenseurs devrait donc passer de 40/50 = 0,8 à 40/(50+4), soit environ 0,74.

Selon l'invention, on augmente la puissance électrique fournie par la pile à combustible 20 au-delà de la puissance minimale de 4 kWe exigée par le moteur 42 pour produire la pression supplémentaire de 0,5 bar.

La puissance fournie par la pile à combustible 20 est de préférence augmentée jusqu'à un niveau de puissance Pᵤ nécessitant, pour le fonctionnement de la pile à combustible 20, de comprimer l'air à la pression P de 2,5 bars. Supposons que ce niveau Pᵤ soit de 70 kWe. Comme précédemment, la pression P résulte d'une augmentation de 4 kWe de la puissance fournie au moteur 42 par la pile à combustible 20, les 5 kWe complémentaires étant fournis par la turbine 44 du fait de l'augmentation de la pression dans les gaz anodique et cathodique. Cependant, avantageusement, la pile à combustible fournit une puissance plus élevée de 70 kWe. La puissance en excès, soit 70 - 54 = 16 kWe, peut avantageusement être stockée dans la batterie 32 pour être utilisée ultérieurement.

La puissance délivrée par le pile à combustible 20 est ainsi répartie entre 14 kWe (10+4) destinés au moteur 42, 40 kWe au moteur de traction, et 16 kWe stockés dans la batterie 32.

Le rendement électrique du générateur après augmentation de la pression dans les condenseurs est donc de (40+16)/70, soit environ 0,8.

Pour améliorer le rendement électrique, on augmente la puissance fournie par la pile à combustible 20 au-delà de la puissance minimale nécessaire pour que le moteur 42 rétablisse un bilan en eau satisfaisant et on stocke l'énergie produite en excès.

Il est clair que toute augmentation de la puissance fournie par la pile à combustible 20 au-delà de la puissance minimale nécessaire pour que le moteur 42 rétablisse un bilan en eau satisfaisant est avantageuse et que l'invention ne se limite donc pas à une augmentation de la puissance électrique fournie par la pile à combustible jusqu'au niveau de puissance Pᵤ décrit ci-dessus.

Selon l'invention, on profite de l'augmentation de la pression rendue nécessaire pour rétablir le bilan en eau pour produire de l'énergie électrique et la stocker. L'amélioration du rendement électrique tient au fait que l'augmentation de la pression est utilisée pour augmenter non seulement la production d'eau dans les condenseurs, mais aussi la production d'énergie « utile ».

Le procédé selon l'invention est particulièrement avantageux à faible charge de la pile à combustible 20, dans des conditions de pression des gaz anodique et cathodique qui ne permettent pas de mettre en rotation la turbine.

Dans ces conditions, l'augmentation de la puissance fournie par la pile à combustible peut en effet permettre de dépasser le seuil à partir duquel la turbine 44 est mise en rotation. Le rendement électrique en est donc amélioré, une partie de la puissance consommée par le compresseur 38 étant de la puissance récupérée et fournie par la turbine 44.

La présence d'une turbine 44 n'est pas indispensable à l'invention, même si elle est préférable.

Considérons l'exemple ci-dessus sans présence d'une turbine. Si la pile à combustible 20 était commandée pour ne fournir que la puissance supplémentaire nécessaire au moteur 42 du compresseur 38 afin de délivrer la pression supplémentaire, le rendement électrique serait de 40/(50+9) = 0,68, toute la puissance supplémentaire de 9 kWe étant fournie au moteur 42 par la pile à combustible 20.

Selon l'invention, pour obtenir du compresseur 38 de l'air à la pression P de 2,5 bars, la pile à combustible 20 sera commandée par exemple pour fournir 75 kWe, dont 19 kWe (10+9) seront destinés au moteur 42, 40 kWe au moteur de traction, et 16 kWe stockés dans la batterie 32.

Le rendement électrique du générateur sera alors amélioré, pour atteindre (40+16)/75, soit environ 0,75.

Bien entendu, la présente invention n'est pas limitée à un procédé applicable au seul générateur décrit et représenté, fourni à titre d'exemple illustratif et non limitatif.

En particulier, l'invention n'est pas limitée à l'architecture représentée.

Le dispositif de reformage n'est pas indispensable pour la mise en oeuvre de l'invention, la pile à combustible pouvant par exemple être alimentée en hydrogène à partir d'un réservoir de stockage. L'invention n'est pas limitée à un type de pile à combustible ou de système reformeur.

Le nombre de condenseurs n'est pas non plus limité. Tout condenseur traversé par un gaz dont la pression est liée à celle du compresseur 38 pourrait être utilisé.

La turbine pourrait également être couplée à un compresseur quelconque.

Le nombre d'étages de compression n'est pas non plus limitatif. Par « compresseur », on entend tout moyen de compression.

De préférence, comme dans le mode de réalisation de la figure 2, le générateur comprend, outre le premier compresseur 38, un deuxième compresseur 38', non motorisé, mais entraîné par une deuxième turbine 44' pouvant être entraînée par les gaz anodique ou cathodique, comme représenté sur la figure 2. Chacune des première et deuxième turbines 44 et 44', ainsi que deuxième compresseur 38', peuvent être sélectivement contournés, ou « shuntés », au moyen de première, deuxième et troisième branches de dérivation 130, 130' et 132 respectivement, pourvues de première, deuxième et troisième vannes d'obturation 134, 134' et 136 respectivement, commandées par le calculateur 115 par l'intermédiaire de lignes de commande non représentées.

Le fonctionnement des compresseurs est commandé par le calculateur 115 de manière que l'air comprimé par l'ensemble des deux compresseurs 38 et 38' ait la pression déterminée par le calculateur 115, selon le procédé de l'invention, pour satisfaire les besoins en eau du générateur 10.

Si la pression demandée est faible, le deuxième compresseur 38' et la deuxième turbine 44' sont mis en dérivation, c'est à-dire désactivés, par ouverture des vannes 136 et 134'. La vanne 134 est fermée et seul le premier compresseur 38 fonctionne. La turbine 44 entraîne le compresseur 38 et la consommation du moteur 42 est avantageusement limitée.

Si la pression demandée est plus élevée, selon l'invention, on augmente la puissance électrique délivrée par le générateur 10 afin de produire une plus grande quantité de gaz anodique et cathodique et on stocke la puissance électrique excédentaire. La plus grande quantité de gaz anodique et cathodique permet avantageusement de récupérer plus d'énergie sur les turbines pour limiter la perte de rendement.

De préférence, les vannes 134' et 136 sont fermées de manière que les gaz anodique et/ou cathodique entraînent la turbine 44' et que le deuxième compresseur 38' comprime l'air destiné à la pile à combustible. Avantageusement, l'entraînement du compresseur 38' par la turbine 44' n'implique aucune production de puissance supplémentaire par la pile à combustible 20. La vanne 134 est ouverte pour court-circuiter la première turbine 44. Le compresseur 38 est entraîné par le moteur 42. Les deux compresseurs fonctionnent alors en série et la pression de l'air qu'ils compriment en est augmentée.

L'utilisation d'un dispositif de compression à deux compresseurs en série tels que celui représenté sur la figure 2 permet avantageusement de générer de l'air à une pression variable de manière simple et fiable.

## Revendications

1. Procédé de régulation de la pression d'un gaz d'échappement d'une pile à combustible (20) de manière à réguler l'aptitude à la condensation dudit gaz, **caractérisé en ce qu'**on régule ladite pression par ajustement de la puissance électrique demandée à ladite pile à combustible (20).

2. Procédé selon la revendication 1, **caractérisé en ce qu'**on stocke l'énergie électrique produite par ladite pile à combustible (20) et non consommée.

3. Dispositif de condensation d'un gaz d'échappement d'une pile à combustible (20) comportant un condenseur (100 ;104) par lequel transite ledit gaz d'échappement et des moyens de régulation (115,38,20) de la pression dudit gaz d'échappement dans ledit condenseur (100 ;104), **caractérisé en ce que** lesdits moyens de régulation sont mis en oeuvre selon un procédé conforme à l'une quelconque des revendications précédentes.

4. Dispositif selon la revendication 3, **caractérisé en ce qu'**il comporte une turbine (44) par laquelle transite ledit gaz d'échappement après avoir traversé ledit condenseur (100;104).

5. Dispositif selon la revendication 4, **caractérisé en ce que** ladite turbine (44) est couplée à un compresseur (38) d'un gaz destiné à ladite pile à combustible (20) et/ou à un système reformeur (60) de carburant destiné à ladite pile à combustible.

6. Dispositif selon la revendication 5, **caractérisé en ce que** ledit compresseur (38) comporte deux étages de compression.

## Claims

1. Method for regulating the pressure of an exhaust gas from a fuel cell (20) so as to regulate the ability to condense said gas, **characterized in that** said pressure is regulated by adjusting the electric power required from said fuel cell (20).

2. Method according to Claim 1, **characterized in that** the unconsumed electrical energy produced by said fuel cell (20) is stored.

3. Device for condensing an exhaust gas from a fuel cell (20) comprising a condenser (100; 104) through which said exhaust gas passes and means (115, 38, 20) for regulating the pressure of said exhaust gas in the said condenser (100; 104), **characterized in that** said regulating means are employed by a method according to any one of the preceding claims.

4. Device according to Claim 3, **characterized in that** it includes a turbine (44) through which said exhaust gas passes after having passed through said condenser (100; 104).

5. Device according to Claim 4, **characterized in that** said turbine (44) is coupled to a compressor (38) of a gas intended for said fuel cell (20) and/or a system (60) for reforming the fuel intended for said fuel cell.

6. Device according to Claim 5, **characterized in that** said compressor (38) has two compression stages.

## Patentansprüche

1. Verfahren zur Steuerung des Abgasdrucks einer Brennstoffzelle (20), um die Kondensationsfähigkeit dieses Gases zu regeln, **dadurch gekennzeichnet, dass** der Druck durch Anpassung der erforderlichen elektrischen Leistung an der Brennstoffzelle (20) geregelt wird.

2. Verfahren nach Anspruch 1, **dadurch gekennzeichnet, dass** die von der Brennstoffzelle (20) erzeugte und nicht verbrauchte elektrische Energie gespeichert wird.

3. Vorrichtung zur Kondensation eines Abgases einer Brennstoffzelle (20), umfassend einen Kondensator (100; 104), durch den das Abgas strömt, und Mittel (115, 38, 20) zur Kontrolle des Drucks des Abgases in dem Kondensator (100; 104), **dadurch gekennzeichnet, dass** die Kontrollmittel nach einem Verfahren nach einem der vorhergehenden Ansprüche eingesetzt werden.

4. Vorrichtung nach Anspruch 3, **dadurch gekennzeichnet, dass** sie eine Turbine (44) umfasst, durch die das Abgas strömt, nachdem es durch den Kondensator (100; 104) geströmt ist.

5. Vorrichtung nach Anspruch 4, **dadurch gekennzeichnet, dass** die Turbine (44) an einen Kompressor (38) eines Gases, das für die Brennstoffzelle (20) bestimmt ist, und/oder ein Reformersystem (60) von Treibstoff, der für die Brennstoffzelle bestimmt ist, gekoppelt ist.

6. Vorrichtung nach Anspruch 5, **dadurch gekennzeichnet, dass** der Kompressor (38) zwei Kompressionsstufen umfasst.
